# EUROPÄISCHE PATENTSCHRIFT

(11) **EP 2 957 462 B1**
(45) Veröffentlichungstag und Bekanntmachung des Hinweises auf die Patenterteilung: **01.06.2022**
(21) Anmeldenummer: 15001747.3
(22) Anmeldetag: 15.06.2015
(51) Int. Cl.: B60Q 1/08, B60Q 1/14, G08G 1/16

(54) **VERFAHREN ZUM STEUERN EINER LICHTVERTEILUNG EINES SCHEINWERFERS EINES KRAFTFAHRZEUGS**
METHOD FOR CONTROLLING A LIGHT DISTRIBUTION OF A HEADLIGHT OF A MOTOR VEHICLE
PROCEDE DE COMMANDE D'UNE REPARTITION DE LUMIERE D'UN PHARE DE VEHICULE AUTOMOBILE

(30) Priorität: 20.06.2014 DE 102014009253
(43) Veröffentlichungstag der Anmeldung: 23.12.2015
(73) Patentinhaber: AUDI AG, 85045 Ingolstadt (DE)
(72) Erfinder: Funk, Christian, DE - 92339 Beilngries (DE); Omerbegovic, Said, DE - 65933 Frankfurt (DE)
(74) Vertreter: Bauer, Dominik Michael

(56) Entgegenhaltungen:
- EP-A2- 2 489 984
- EP-A2- 2 562 039
- DE-A1-102007 058 637
- DE-A1-102009 009 473
- DE-A1-102009 051 485
- DE-A1-102011 113 019
- DE-A1-102012 100 463
- DE-B3-102011 081 394
- JP-A- 2010 020 721

## Beschreibung

Die Erfindung betrifft ein Verfahren zum Steuern einer Lichtverteilung eines Scheinwerfers eines Fahrzeugs. Des Weiteren betrifft die Erfindung eine Steueranlage für einen Scheinwerfer eines Fahrzeugs.

Aus der DE 10 2010 048 100 A1 ist ein Verfahren zum Steuern einer Lichtverteilung eines Scheinwerfers eines Fahrzeugs bereits bekannt. Dabei wird die Lichtverteilung in Abhängigkeit des Wetters, insbesondere, ob es nebelig ist, gesteuert. Dabei ist vorgesehen, dass in der Umgebung des Fahrzeugs erfasste Objekte, insbesondere weitere Fahrzeuge, aus einem Ausleuchtungsbereich des Scheinwerfers ausgespart werden.

Aus der DE 10 2007 058 637 A1 ist ebenfalls solch ein Verfahren bekannt. Hier ist in einem Eigenfahrzeug mindestens ein fahrbahnseitiger Sensor vorgesehen, welcher ein das Eigenfahrzeug überholendes Fremdfahrzeug detektiert. Damit soll eine Relativgeschwindigkeit des überholenden Fremdfahrzeugs in Bezug auf das Eigenfahrzeug ermittelt und damit der Zeitpunkt berechnet werden, ab welchem ein Fernlicht des Eigenfahrzeugs auf Abblendlicht umgeschaltet werden soll, das heißt das Fernlicht ausgeschaltet wird, um eine Blendung eines Fahrers des überholenden Fremdfahrzeugs zu vermeiden.

In der DE 10 2012 100 463 A1 sind ein Verfahren und eine Vorrichtung zum Steuern einer Lichtverteilung eines Scheinwerfers eines Fahrzeugs ebenfalls offenbart. Dabei ist vorgesehen, dass eine Steueranlage auch die Sensordaten eines zweiten Umfeldsensors zur Steuerung der Lichtverteilung berücksichtigen kann. Ein Detektionsbereich des zweiten Umfeldsensors liegt dabei zumindest teilweise außerhalb des Detektionsbereichs eines ersten Umfeldsensors, welcher als Kamera ausgebildet ist.

Die US 2007/0147055 A1 beschreibt ebenfalls solch ein Verfahren zum Steuern der Lichtverteilung. Hier detektiert eine Sensoreinrichtung ein Objekt vor einem Eigenfahrzeug, insbesondere ein vorausfahrendes oder entgegenkommendes Fremdfahrzeug, und steuert die Lichtverteilung in Abhängigkeit dieser Detektion. Dabei sind zusätzlich zu einer normalen Lichtverteilung zwei weitere Lichtverteilungen vorgesehen, welche berücksichtigen, ob ein vorausfahrendes oder entgegenkommendes Fremdfahrzeug vorhanden ist. Diese Lichtverteilung soll dann eine Blendung eines Fahrers des vorausfahrendes oder entgegenkommendes Fremdfahrzeugs verhindern.

Die DE 10 2012 009 908 A1 offenbart ebenfalls ein Verfahren, bei dem vorgesehen ist, dass mittels einer sogenannten Car-to-Car-Kommunikation Daten zwischen verschiedenen Fahrzeugen ausgetauscht werden und die Lichtverteilung der Scheinwerfer dieser Fahrzeuge in Abhängigkeit dieser Daten so eingestellt werden können, dass eine Verkehrssituation besonders gut ausgeleuchtet werden kann.

Die DE 10 2010 021 320 A1 offenbart ebenfalls ein Verfahren zum Steuern einer Lichtverteilung eines Scheinwerfers eines Fahrzeugs, wobei vorausfahrende oder entgegenkommende Fahrzeuge berücksichtigt werden sollen. Dabei ist weiterhin vorgesehen, dass der Beginn eines Abbiegevorgangs des vorausfahrenden oder entgegenkommenden Fahrzeugs erkannt wird und eine bestimmte Lichtverteilung des Scheinwerfers für eine vorbestimmte Wegstrecke oder eine vorbestimmte Zeit eingestellt bleibt.

Aus der EP 2 562 039 A2 ist ein Verfahren zum Steuern einer Lichtverteilung eines Scheinwerfers bekannt, bei welchem die Lichtverteilung in Abhängigkeit von in der Umgebung des Kraftfahrzeugs erfassten Objekten eingestellt. Zu diesem Zweck kann auch eine zukünftige Trajektorie anhand von das eigene Fahrzeug betreffenden Fahrzeugdaten prädiktiert werden.

Die DE 10 2009 051 485 A1 betrifft ein Verfahren zur Steuerung eines Fahrlichts eines Fahrzeugs mit zumindest einem Scheinwerfer, zumindest einem Sensor zur Detektion von Objekten in einer Umgebung des Fahrzeugs und einer Auswerteeinheit zur Identifizierung der detektierten Objekte. Dabei wird zumindest eine Lichtverteilung des zumindest einen Scheinwerfers derart eingestellt, dass eine optische Achse der Lichtverteilung auf ein als Gefahrenpunkt erkanntes Objekt gerichtet wird.

Die DE 10 2011 113 019 A1 betrifft ein Verfahren zur Ermittlung und Bewertung von Gefahren einer Verkehrssituation zwischen zumindest zwei Verkehrsteilnehmern in einem Straßenkreuzungsbereich. Dabei findet eine kognitive Bewertung einer probabilistischen Interpretation einer Verkehrssituation statt.

Aufgabe der vorliegenden Erfindung ist es, ein Verfahren und eine Steueranlage zu schaffen, mittels welchen sich die Lichtverteilung eines Scheinwerfers in Abhängigkeit einer Trajektorie eines Fahrzeugs einstellen lässt.

Diese Aufgabe wird erfindungsgemäß durch die Gegenstände der unabhängigen Patentansprüche gelöst. Vorteilhafte Ausgestaltungen mit zweckmäßigen Weiterbildungen der Erfindung sind in den abhängigen Patentansprüchen angegeben.

Um ein Verfahren zum Steuern einer Lichtverteilung eines Scheinwerfers eines Eigenfahrzeugs zu schaffen, mittels welchem die Lichtverteilung in Abhängigkeit einer Trajektorie eingestellt werden kann, ist es erfindungsgemäß vorgesehen, dass durch eine Sensoreinrichtung, insbesondere eine Sensoreinrichtung des Eigenfahrzeugs, Sensordaten eines oder mehrer von im Umfeld befindlichen Fremdfahrzeugen erzeugt werden. Insbesondere erfasst die Sensoreinrichtung, wo sich die Fremdfahrzeuge relativ gesehen zum Eigenfahrzeug befinden und mit welcher Relativgeschwindigkeit und/oder - beschleunigung sie sich bewegen. Die Sensoreinrichtung kann dabei beispielsweise einen oder mehrere verschiedene Sensoren des folgenden Typs umfassen: Kamera, Sensoren mit Laser, Lidar, Radar oder Empfänger einer sogenannten Car-to-Car-Kommunikationsanlage.

In einem weiteren Schritt werden Manöverwahrscheinlichkeiten der Fremdfahrzeuge und des Eigenfahrzeugs berechnet. Manöver der Fremdfahrzeuge können also vorausschauend detektiert und anschließend mit entsprechenden Manöverwahrscheinlichkeiten versehen werden. Ein Manöver kann beispielsweise ein Abbiegen, eine Geradeausfahrt, ein Einfahren oder Verlassen eines Kreisverkehrs, ein Folgen eines Fahrzeugs eines weiteren Fahrzeugs, ein Beschleunigen, ein Bremsen, ein Überholen oder ein Spurwechsel sein. Die Manöverwahrscheinlichkeit gibt dabei an, wie hoch eine Wahrscheinlichkeit ist, dass das Eigenfahrzeug und/oder eines der Fremdfahrzeuge solch ein spezifisches Manöver durchführt. Die Manöverwahrscheinlichkeit kann dabei beispielsweise einen Wert von 0 bis 1 annehmen. Die Manöverwahrscheinlichkeit kann dabei mit Hilfe der durch die Sensoreinrichtung erzeugten Sensordaten berechnet werden.

In einem nächsten Schritt wird eine Prognose einer Trajektorie zumindest eines der Fahrzeuge anhand der durch die Sensoreinrichtung erfassten Sensordaten unter Berücksichtigung der berechneten Manöverwahrscheinlichkeiten der Fahrzeuge erstellt. Dafür gibt es zwei verschiedene Methoden die Manöverwahrscheinlichkeiten bei der Prognose zu berücksichtigen.

Bei der ersten Methode werden für wenigstens eines der Fahrzeuge die Trajektorien mehrer möglicher Manöver berechnet. Anhand der berechneten Manöverwahrscheinlichkeiten wird dann die eine wahrscheinlichste Trajektorie oder mehrere wahrscheinlichste Trajektorien ausgewählt und in dem nächsten Schritt des Verfahrens genutzt. Beispielsweise kann nur die Trajektorie für den nächsten Schritt des Verfahrens genutzt werden, welche die höchste Manöverwahrscheinlichkeit aufweist. Die Manöverwahrscheinlichkeit kann dabei auch dazu genutzt werden, die prognostizierte Trajektorie oder die prognostizierten Trajektorien multiplikativ zu gewichten und in eine Gesamtbetrachtung einfließen zu lassen.

Bei der zweiten Methode wird erst betrachtet, welches Manöver anhand der Manöverwahrscheinlichkeit als das Wahrscheinlichste erkannt wurde. Dann wird nur die eine Trajektorie des Fahrzeugs für das Manöver prognostiziert, welches als am wahrscheinlichsten gilt. Es können aber auch alle Trajektorien prognostiziert werden, deren Manöverwahrscheinlichkeit über einem bestimmten Grenzwert liegt. Bei der zweiten Methode gibt es gegenüber der ersten Methode einen Vorteil in Form einer geringeren benötigten Rechenleistung.

In einem letzten Schritt wird die Lichtverteilung des Scheinwerfers in Abhängigkeit von der zumindest einen prognostizierten Trajektorie eingestellt. Damit kann also die Lichtverteilung vorausschauend an eine Fahrsituation angepasst werden. Somit ist es beispielsweise möglich, dass die Lichtverteilung bereits vor einem Abbiegevorgang eines der Fremdfahrzeuge so eingestellt wird, dass ein Fahrer dieses einen Fremdfahrzeugs nicht geblendet werden kann, sodass potentiell gefährliche Fahrsituationen vermieden werden können. Die Lichtverteilung kann auch so eingestellt werden, dass sie die Verkehrssituation für einen Fahrer des Eigenfahrzeugs besonders gut in Abhängigkeit von dessen prädizierten Manövern und den prädizierten Manövern der Fremdfahrzeuge, insbesondere bevor solch ein Manöver beginnt oder eingeleitet wird, ausgeleuchtet wird.

Erfindungsgemäß ist es vorgesehen, dass überprüft wird, ob ein Eintrittsereignis eines der Fremdfahrzeuge in einem Bereich der Lichtverteilung bevorsteht, in welchem ein Blendkriterium durch die Lichtverteilung erfüllt ist, und die Lichtverteilung des Scheinwerfers so eingestellt wird, dass das Erfüllen des Blendkriteriums in dem Bereich verhindert wird. Bei dem Blendkriterium kann es sich beispielsweise um eine vorbestimmte Lichtstärke handeln, insbesondere eine vorbestimmte Mindestlichtstärke, ab welcher der Fahrer eines der Fremdfahrzeuge geblendet werden kann. Die Lichtverteilung kann dann bereits vorher schon so eingestellt werden, dass eine Blendung dieses Fahrers vermieden wird, insbesondere wenn er ein Manöver durchführt. Beispielsweise kann durch ein Ein- und/oder Ausschalten von einzelnen Segmenten des Scheinwerfers, insbesondere von Leuchtdioden, auch LEDs genannt, eine Verschiebung oder Anpassung der vertikalen/horizontalen Hell-Dunkel-Grenze erreicht werden. Alternativ kann auch die gesamte Lichtverteilung verstellt werden, beispielsweise durch ein Verschwenken des Scheinwerfers oder der Positionierung einer Blende vor einer Leuchtquelle des Scheinwerfers. Es ist ebenfalls möglich, beispielsweise ein Fernlicht auszuschalten, um die gesamte Lichtstärke in einem Bereich oder in der gesamten Lichtverteilung zu senken.

In der Erfindung ist es vorgesehen, dass die Lichtverteilung entlang der prognostizierten Trajektorie des Eigenfahrzeugs ausgerichtet wird. Damit kann ein Lichtsystem vorausschauend angesteuert werden. Beispielsweise kann bei einem Überholmanöver die prognostizierte Trajektorie des Eigenfahrzeugs besonders hell ausgeleuchtet werden. Damit kann dann ein Blick des Fahrers des Eigenfahrzeugs gelenkt werden. Eine Erlebbarkeit der Steuerung und die Effizienz des Scheinwerfers werden gesteigert. Nach Bedarf kann diese Ausgestaltung auch dazu genutzt werden, die benötigte Energie für den Scheinwerfer zu reduzieren, indem die Lichtverteilung so eingestellt wird, dass nur notwendige Bereiche ausgeleuchtet werden.

In weiterer vorteilhafter Ausgestaltung des Verfahrens ist vorgesehen, dass die Prognose der zumindest einen Trajektorie mittels eines Bayes-Filters, insbesondere eines Kalman-Filters, gemacht wird. Der Bayes-Filter verfolgt dabei die Bewegung des Eigenfahrzeugs und/oder der Fremdfahrzeuge, insbesondere anhand von Sensordaten, und prädiziert daraus die zukünftige Trajektorie, insbesondere mittels einer Extrapolation. Der Bayes-Filter nutzt dazu ein Bewegungsmodell, das eine konstante Fahrzeugbewegung ohne Veränderung einer Dynamik des Fahrzeugs modelliert. Es kann dabei ein eigenes Bewegungsmodell pro Fahrmanöver vorgesehen werden, dass nur eine Bewegung für ein vorbestimmtes Fahrmanöver extrapoliert.

Gleichzeitig läuft die Manöverprädiktion mit, welche durch verschiedene Ansätze realisierbar ist, insbesondere durch Ansätze der künstlichen Intelligenz wie insbesondere eines dynamischen Bayesschen Netzes, einer Fuzzy-Logik oder einem neuralen Netz, berechnet. Bei der Manöverprädiktion werden anhand der Sensordaten beispielsweise die Trajektorien für jedes Manöver prognostiziert. Gleichzeitig wird berechnet, mit welcher Manöverwahrscheinlichkeit jedes Manöver ausgeführt wird. Dann kann eine oder mehrere der prognostizierten Trajektorien mittels der Manöverwahrscheinlichkeiten ausgewählt werden, um die Lichtverteilung des Scheinwerfers des Eigenfahrzeugs in Abhängigkeit dieser einen oder mehreren ausgewählten Trajektorien einzustellen. Eine Zuordnungsvorschrift von Sensordaten zu einer Manöverwahrscheinlichkeit kann insbesondere mittels Trainingsdaten ermittelt werden, zu denen das zugehörige Manöver bekannt ist. Dann kann mittels dieser Trainingsdaten zum Beispiel ein Hidden-Markov-Modell trainiert werden. Eine andere Möglichkeit ist das Nutzen von Expertenwissen.

Wird anhand der Manöverwahrscheinlichkeiten erkannt, dass ein anderes Manöver als die Eingangsgröße, insbesondere also eine nicht-dynamische Fahrzeugbewegung, also zum Beispiel ein Überholmanöver mit Beschleunigung und Spurwechsel statt einer normalen Weiterfahrt, wahrscheinlich ist, wird diese Prognose bereits vorher für eine finale Trajektorienprädiktion des Fahrzeugs genutzt. Dieses a priori-Wissen wird dazu genutzt, um eine andere Bewegung, insbesondere eine dynamische Bewegung, des Fahrzeugs zu modulieren. Die Prognose der Trajektorie zumindest eines der Fahrzeuge wird mit der Manöverprädiktion entweder ergänzt und modifiziert oder kann dazu genutzt werden eine prognostizierte Trajektorie für den nächsten Schritt des Verfahrens auszuwählen. Dies führt zu genaueren Prognosen, auch Schätzungen genannt, der Trajektorie bei einer Durchführung von dynamischen Manövern der Fahrzeuge.

Die beiden vorher beschriebenen Methoden zur Berücksichtigung von Manöverwahrscheinlichkeit bei der Prognose von Trajektorien können auch dazu genutzt werden, die eine oder mehrere Trajektorien nicht nur eines Fahrzeugs sondern auch mehrerer Fahrzeuge zu prognostizieren. Dabei kann dann in vorteilhafter Weise, wie im folgenden beschrieben wird, auch eine Interaktion von Fahrzeugen untereinander berücksichtigt werden.

In weiterer vorteilhafter Ausgestaltung der Erfindung ist es vorgesehen, dass bei der Berechnung von Manöverwahrscheinlichkeiten und/oder der Prognose der Trajektorie eines der Fahrzeuge eine Interaktion des Eigenfahrzeugs mit wenigstens einem der Fremdfahrzeuge berücksichtigt wird. Bei der Interaktion kann es sich insbesondere um Manöver handeln, wie beispielsweise ein Überholen eines vorausfahrenden Fremdfahrzeugs durch das Eigenfahrzeug. Dabei kann beispielsweise ein Beschleunigen des Eigenfahrzeugs bei einem Folgen eines vorausfahrenden Fremdfahrzeugs und dabei eine Änderung der Relativgeschwindigkeit dieser beiden Fahrzeuge in einer vergrößerten Wahrscheinlichkeitsangabe dafür resultieren, dass das Eigenfahrzeug das Fremdfahrzeug überholen wird. In diesem Fall kann dann entsprechend die Lichtverteilung in vorteilhafter Art und Weise eingestellt werden. Wird aber beispielsweise gleichzeitig prognostiziert, dass das vorausfahrende Fremdfahrzeug ein Abbiegemanöver durchführen wird, so ist gerade aus der Berücksichtigung der Interaktion darauf zu schließen, dass das Eigenfahrzeug nicht zu einem Überholmanöver ansetzt, sondern beispielsweise seine Geradeausfahrt fortsetzen wird. Mit dieser Ausgestaltung ist also eine genauere Prognose der Trajektorie eines der Fahrzeuge möglich. Ein Abbiegevorgang kann über die Entfernung zu einer Kreuzung und die Geschwindigkeit des Fahrzeugs prognostiziert werden.

Besonders vorteilhaft ist es, wenn bei der Berechnung von Manöverwahrscheinlichkeiten und/oder der Prognose der Trajektorie eines der Fahrzeuge eine Interaktion von wenigstens zwei Fremdfahrzeugen miteinander berücksichtigt wird. Fremdfahrzeuge können in derselben Art und Weise miteinander interagieren wie das Eigenfahrzeug mit einem Fremdfahrzeug interagieren kann. Beispielsweise kann ein Fremdfahrzeug ein weiteres Fremdfahrzeug überholen. Beispielsweise kann aus einer Beschleunigung eines Fremdfahrzeugs, welches einem weiteren Fremdfahrzeug folgt, daraus geschlossen werden, dass dieses das ihm vorausfahrende Fremdfahrzeug überholen wird. Entsprechend kann dann ebenfalls früher und noch genauer eine Prognose der Trajektorie dieses Fremdfahrzeugs gemacht werden. Außerdem kann auch erst aus solcher einer Interaktion eine Manöverwahrscheinlichkeit für den geschilderten Überholvorgang des weiteren Fremdfahrzeugs berechnet werden. Entsprechend kann dann die Lichtverteilung des Scheinwerfers des Eigenfahrzeugs so eingestellt werden, dass ein Fahrer des Fremdfahrzeugs, welches beispielsweise das Überholmanöver durchführt, nicht geblendet wird.

In weiterer vorteilhafter Ausgestaltung ist es vorgesehen, dass aus einer Fahrsituation Plausibilitätskriterien abgeleitet werden und bei der Berechnung von Manöverwahrscheinlichkeiten anhand dieser Plausibilitätskriterien überprüft wird, ob ein Manöver plausibel ist. Mit anderen Worten wird beispielsweise geprüft, ob ein Manöver überhaupt durchführbar und/oder erlaubt ist. Bei den Plausibilitätskriterien kann es sich also beispielsweise um ein Überholverbot, insbesondere eine durchgezogene Linie als Fahrbahnmarkierung, handeln oder beispielsweise eine Veränderung der Straße, ein Sichtverhältnis oder ein Geschwindigkeitslimit. Ein weiteres Plausibilitätskriterium kann die Ausführbarkeit eines Manövers sein. Beispielsweise kann ein entgegenkommendes Fahrzeug ein Überholmanöver unmöglich machen, oder das Geschwindigkeitslimit lässt keine Erhöhung der Geschwindigkeit zu, die ein Überholmanöver ermöglicht. Beispielsweise ist aber auch kein Abbiegemanöver möglich, wenn keine Straße vorhanden ist, auf die abgebogen werden kann. Das Plausibilitätskriterium kann dann dazu genutzt werden, entweder die Manöverwahrscheinlichkeit zu ändern, insbesondere auf 0, oder die prognostizierten Trajektorien selbst direkt zu modifizieren. Mit der Berücksichtigung des Plausibilitätskriteriums ist also eine besonders genaue Prognose einer Trajektorie zumindest eines der Fahrzeuge möglich. Entsprechend kann die Lichtverteilung besonders gut eingestellt werden.

In weiterer vorteilhafter Ausgestaltung der Erfindung ist es vorgesehen, dass für die Berechnung der Manöverwahrscheinlichkeiten und/oder Trajektorien eine digitale Straßenkarte berücksichtigt wird. Beispielsweise können die Position und Relativgeschwindigkeit auf eine digitale Straßenkarte in einer Steueranlage eingetragen werden und dort die Interaktionen der Fahrzeuge miteinander berechnet werden. Ferner können insbesondere in der digitalen Straßenkarte schon Plausibilitätskriterien, wie beispielsweise das Überholverbot oder das Geschwindigkeitslimit, hinterlegt werden. Auch können die Trajektorien dem Verlauf der Straße angepasst werden. Damit können also Manöverwahrscheinlichkeiten und/oder Trajektorien mit Hilfe der digitalen Straßenkarte besonders genau prognostiziert werden. Gegebenenfalls ist es damit auch möglich, eventuell sonst notwendige Sensoren der Sensoreinrichtung, mittels welchen Plausibilitätskriterien und/oder ein Verlauf der Straße erfasst werden, einzusparen. Außerdem kann eine digitale Straßenkarte dazu genutzt werden, globale Positionsangaben, sogenannte GPS-Koordinaten, des Eigenfahrzeugs und der Fremdfahrzeuge in Relation zueinander zu setzen.

Die vorstehend im Zusammenhang mit dem erfindungsgemäßen Verfahren zum Steuern einer Lichtverteilung eines Scheinwerfers erfindungsgemäßen Vorteile und Ausgestaltungen gelten in ebensolcher Weise für die Steueranlage für den Scheinwerfer des Fahrzeugs.

Weitere Vorteile und Einzelheiten der Erfindung ergeben sich aus der nachfolgenden Beschreibung bevorzugter Ausführungsbeispiele sowie anhand der Zeichnungen. Diese zeigen in:
- Fig. 1: in einer schematischen Draufsicht ein Eigenfahrzeug mit einer Steueranlage für einen Scheinwerfer und mit einer Sensoreinrichtung;
- Fig. 2: einen schematischer Ablaufplan zur Prognose von zumindest einer Trajektorie;
- Fig. 3a: die Lichtverteilung des Scheinwerfers des Eigenfahrzeugs bei einer Folgefahrt eines vorausfahrenden Fremdfahrzeugs; und
- Fig. 3b: die Steuerung der Lichtverteilung des Scheinwerfers des Eigenfahrzeugs bei einem prognostizierten Überholmanöver des vorausfahrenden Fremdfahrzeugs durch das Fremdfahrzeug.

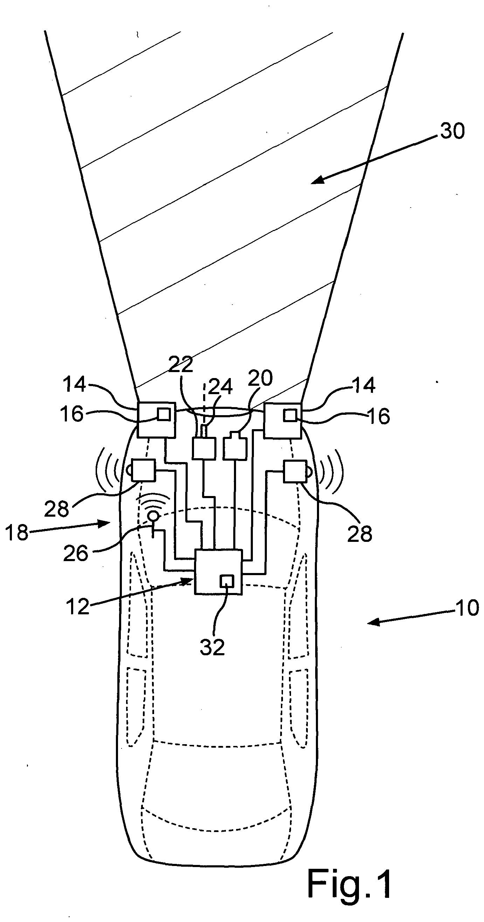

Fig. 1 zeigt in einer schematischen Draufsicht ein Eigenfahrzeug 10, welches mit einer Steueranlage 12 zum Steuern von Scheinwerfern 14 des Eigenfahrzeugs 10 ausgerüstet ist. Insbesondere kann sie die Fernlichter 16 der Scheinwerfer 14 an- und ausschalten. Dabei umfasst die Steueranlage 12 eine Sensoreinrichtung 18, welche die folgenden Sensoren umfassen kann: eine nach vorne gerichtete Kamera 20 sowie einen nach vorne gerichteten Sensor 22 mit Laser 24, einen Empfänger 26 zum Empfangen von durch Fremdfahrzeuge ausgesendeten Signale sowie zwei zum Beispiel seitlich ausgerichtete Radare 28. Vor dem Eigenfahrzeug 10 ist ferner eine Lichtverteilung 30 dargestellt, welche im Wesentlichen durch die Scheinwerfer 14 mit den Fernlichtern 16 erzeugt wird.

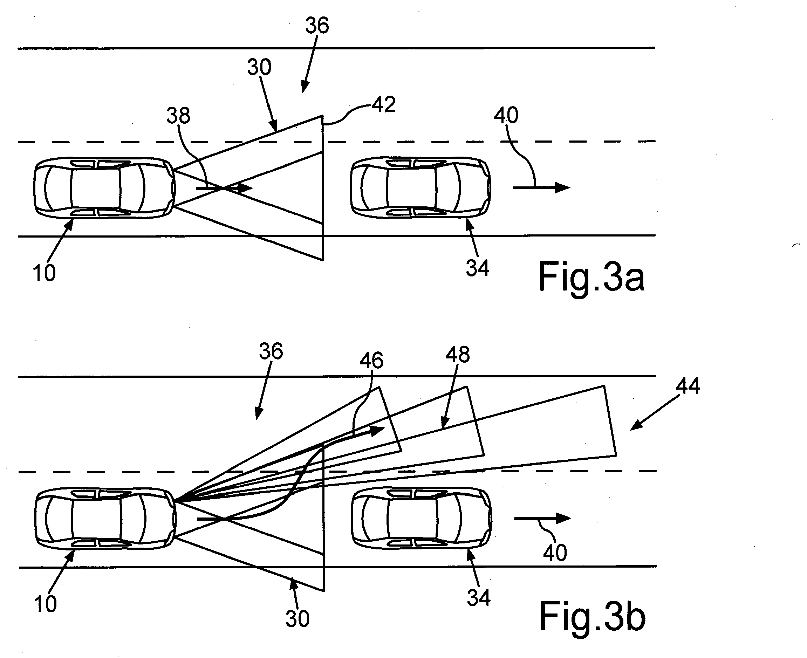

Das Verfahren zum Steuern der Lichtverteilung 30 der Scheinwerfer 14 des Eigenfahrzeugs 10 kennzeichnet sich nun durch folgende Schritte: Zunächst werden Sensordaten von im Umfeld befindlichen Fremdfahrzeugen durch die Sensoreinrichtung 16 mit ihren Sensoren erfasst. Bei dem Fremdfahrzeug 34 kann es sich beispielsweise um ein kreuzendes Fahrzeug handeln, ein folgendes Fahrzeug oder auch ein vorausfahrendes Fahrzeug, wie es in der in Fig. 3a und 3b schematisch dargestellten Verkehrssituation gezeigt ist.

In einem weiteren Schritt wird die Manöverwahrscheinlichkeit des Eigenfahrzeugs 10 und der Fremdfahrzeuge 34 berechnet. Diese wird beispielsweise durch die Recheneinheit 32 der Steueranlage 12 berechnet. In einem weiteren Schritt wird eine Prognose einer Trajektorie zumindest eines der Fahrzeuge 10, 34 anhand der durch die Sensoreinrichtung 12 erfassten Sensordaten unter Berücksichtigung der berechneten Manöverwahrscheinlichkeiten der Fahrzeuge 10, 34 gemacht. Fig. 3a zeigt beispielsweise, dass prognostiziert wird, dass das Eigenfahrzeug 10 dem vorausfahrenden Fremdfahrzeug 34 weiter geradeaus auf der Straße 36 folgen wird. Diese Trajektorie wird auch durch den Pfeil 38 veranschaulicht. Auch für das Fremdfahrzeug 34 wird prognostiziert, dass es weiter geradeaus auf der Straße 36 fahren wird, veranschaulicht durch den Pfeil 40. Entsprechend wird die Lichtverteilung 30 des Eigenfahrzeugs 10 so eingestellt, dass ein Fahrer des vorausfahrenden Fremdfahrzeugs 34 nicht geblendet wird, insbesondere durch eine Reflexion des Lichts an einem Rückspiegel. Im in Fig. 3a gezeigten Beispiel wird dies dadurch erreicht, dass die Lichtverteilung 30 so eingestellt wird, dass eine Hell-Dunkel-Grenze 42 der Lichtverteilung 30 bereits zwischen dem Eigenfahrzeug 10 und dem vorausfahrenden Fremdfahrzeug 34 verläuft.

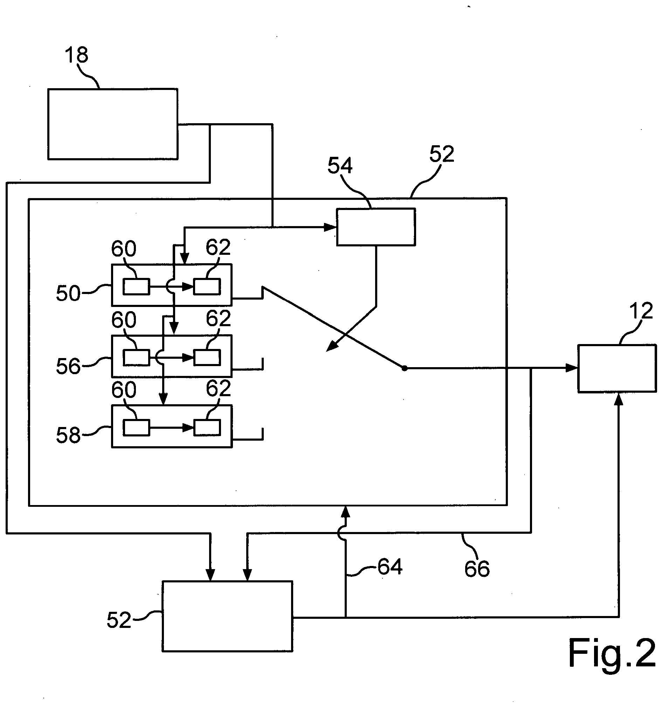

Fig. 3b zeigt einen Fall, bei dem berechnet wurde, dass das Eigenfahrzeug 10 das Fremdfahrzeug 34 überholen wird. Dafür hat beispielsweise das Eigenfahrzeug 10 beschleunigt. Ein Plausibilitätskriterium, nämlich, dass die zweite Spur 44 der Straße 36 frei von entgegenkommenden Fahrzeugen ist und lang genug geradeaus führt, dass ein Überholen möglich ist, wobei auch kein Überholverbot existiert, ist ebenfalls erfüllt. Ein Überholen des Fremdfahrzeugs 34 durch das Eigenfahrzeug ist also möglich. Dabei wurde für das Überholen durch das Eigenfahrzeug 10 aufgrund der Beschleunigung eine Wahrscheinlichkeit mittels der in Fig. 2 dargestellten Manöverprädiktion 52 von 80% berechnet. Entsprechend wird eine neue Trajektorie für das Eigenfahrzeug 10 berechnet, welche hier in Fig. 3b durch den Pfeil 46 veranschaulicht ist. Die Manöverwahrscheinlichkeit für ein weiteres Folgen des Eigenfahrzeugs 10 des Fremdfahrzeugs 34 und damit der Trajektorie gemäß Pfeil 38 wird durch die Manöverprädiktion 52 auf lediglich 20% berechnet. Für das Fremdfahrzeug 34 wird weiter eine Vorausfahrt prognostiziert, veranschaulicht durch den Pfeil 40. Entsprechend wird die Lichtverteilung 30 des Eigenfahrzeugs 10 bereits vor Beginn des Überholvorgangs anders eingestellt als die Lichtverteilung 30, welche in Fig. 3a gezeigt ist. Die Lichtverteilung 30 wird nun entlang der wahrscheinlichsten prognostizierten Trajektorie des Eigenfahrzeugs 10, veranschaulicht durch den Pfeil 46, ausgerichtet. Dabei handelt es sich um die Trajektorie des prognostizierten Überholmanövers.

Dabei ist zu erkennen, dass nun auch ein Bereich 48 auf der zweiten Fahrbahn 44 durch die Lichtverteilung ausgeleuchtet wird. Damit wird ein Blick des Fahrers des Eigenfahrzeugs 10 auf seine voraussichtliche Trajektorie gelenkt, diese ist nun besonders gut ausgeleuchtet. Als weiterer Vorteil ist hier zu nennen, dass das Verfahren dem Fahrer des Eigenfahrzeugs 10 damit auch signalisiert, dass ein Überholvorgang hier nun möglich ist.

Fig. 2 zeigt in einer schematischen Ansicht, wie eine Trajektorie eines Fahrzeugs unter Berücksichtigung einer Manöverwahrscheinlichkeit anhand einer Manöverprädiktion 52 gemacht wird, welche als Eingangsgröße die durch die Sensoreinrichtung 18 erzeugt Sensordaten nutzt. Mittels dem Beispielsweise als dynamisches Bayessches Netz realisierten probabilistischen Ansatz wird durch den Algorithmus 54 eine Manöverwahrscheinlichkeit berechnet. Gleichzeitig werden die Sensordaten dazu genutzt, pro Manöver eine Trajektorie zu prognostizieren. Der Bayes-Filter 50 berechnet beispielsweise die Trajektorie einer Weiterfahrt, also einer nicht dynamischen Bewegung eines Fahrzeugs. Ein weiteres Filter 56 kann beispielsweise eine Trajektorie eines Überholmanövers prädizieren, während ein anderes weiteres Filter 58 die Trajektorie eines Abbiegens prädiziert. In jedem Filter 40, 56, 58 ist dafür beispielsweise ein Bewegungsmodell 60 hinterlegt, welches mit den durch die Sensoreinrichtung 18 erzeugten Sensordaten eine Prädiktion 62 einer Trajektorie eines Fahrzeugs, das das entsprechende Manöver ausführt, macht. Mittels der durch den Algorithmus 54 bestimmten Manöverwahrscheinlichkeit wird nun die Prädiktion und damit auch Trajektorie ausgewählt, welche zum Beispiel die höchste Wahrscheinlichkeit aufweist. Im vorliegenden, in Fig. 3a gezeigten Fall ist dies beispielsweise die Weiterfahrt des Eigenfahrzeugs 10. Mit der nunmehr prognostizierten Trajektorie des wahrscheinlichsten Manövers des Eigenfahrzeugs 10 kann dann durch die Steueranlage 12 die Lichtverteilung 30 eingestellt werden.

Weiterhin zeigt Fig. 2 eine, welche hier zwecks einer besseren Übersichtlichkeit ohne weitere Details dargestellt ist. Diese weitere Manöverprädiktion 52 kann beispielsweise genutzt werden, um die wahrscheinlichste Trajektorie eines Fremdfahrzeugs 34 zu prognostizieren und dann in Abhängigkeit davon ebenfalls dann durch die Steueranlage 12 die Lichtverteilung 30 einzustellen. Dabei ist es dann insbesondere möglich, nicht nur die Lichtverteilung in Abhängigkeit von zwei oder mehr prognostizierten Trajektorien einzustellen, sondern auch eine Interaktion der Fahrzeuge untereinander sowohl bei der Prognose der verschiedenen Trajektorien als auch bei der Berechnung von Manöverwahrscheinlichkeiten zu beachten. Dies wird durch die Verbindung der beiden gezeigten Manöverprädiktionen 52 mittels der Pfeile 64, 66 veranschaulicht.

Die Manöverprädiktion 52 kann dabei in der Recheneinheit 32 der Steueranlage 12 des Eigenfahrzeugs 10 implementiert sein.

Die Idee der Erfindung ist also, dass beispielsweise ein Abbiegevorgang eines vorausfahrenden oder entgegenkommenden Fremdfahrzeugs 34 durch die Steueranlage 12 des Eigenfahrzeugs 10 über geeignete Sensordaten, auch Objektdaten genannt, und Algorithmen, also Berechnungsverfahren, erkannt wird, bevor der eigentliche Abbiegevorgang oder ein anderes Manöver beginnt. Die Steueranlage 12 des Eigenfahrzeugs 10 steuert die relevanten Bereiche der Lichtverteilung 30 vorausschauend an, zum Beispiel bei einem nach rechts abbiegenden Fremdfahrzeug 34 werden die Bereiche des Fernlichts rechts von dem Fremdfahrzeug 34 frühzeitig maskiert oder ausgeschaltet.

Zur Erkennung eines Manövers oder Abbiegevorgangs werden verschiedene Sensordaten verwendet. Dazu dient die Sensoreinrichtung 18, wobei diese die Entfernung des Eigenfahrzeugs 10 zum Fremdfahrzeug 34 sowie die Geschwindigkeit und Beschleunigung des Fremdfahrzeugs 34 oder das Aktivieren eines Blinkers oder sonstigen Signalgebers erfassen. Ferner können auch Geschwindigkeit und Beschleunigung des Eigenfahrzeugs 10 als Sensordaten erfasst werden. Dann kann beispielsweise anhand von GPS und/oder Navigationsdaten die Entfernung zu einer nächsten Kreuzung bestimmt werden.

Mit Hilfe dieser Informationen wird dann anhand von einem Algorithmus ein Abbiegevorhaben des vorausfahrenden oder entgegenkommenden Fremdfahrzeugs 34 erkannt. Dann kann die Lichtverteilung 30 des Eigenfahrzeugs 10, beispielsweise über ein An- oder Ausschalten des Fernlichts 16, vorausschauend gesteuert werden. Dadurch wird der Fahrer des Fremdfahrzeugs 34 bei der Durchführung eines Manövers, insbesondere des Abbiegevorgangs, nicht geblendet. Das Potential einer Gefahrensituation durch die Blendung der Fahrer von anderen Fahrzeugen wird also minimiert.

Wird aber beispielsweise ein Folgemanöver erkannt, das heißt das Eigenfahrzeug 10 wird dem vorausfahrenden Fremdfahrzeug 34 auf zunächst unbestimmte Zeit folgen, kann ein Fernlicht 16 ausgeschaltet werden oder der gesamte Scheinwerfer 14 gedimmt werden, um Energie zu sparen, insbesondere auch ohne das eine Straße 36 für den Fahrer des Eigenfahrzeugs 10 schlechter ausgeleuchtet ist. Auch bei einem Überholvorgang, wie in Fig. 3b gezeigt, können weitere Bereiche der Lichtverteilung 30, welche außerhalb der durch den Pfeil 46 dargestellten Trajektorie des Eigenfahrzeugs 10 liegen, gedimmt werden, um Energie zu sparen.

Insgesamt ist somit durch das Beispiel gezeigt, wie durch die Erfindung eine prädiktive Fernlichtansteuerung bei Abbiegevorgängen und ein adaptives Lichtsystem bei Landstraßen und Autobahnfahrten geschaffen werden kann.

## Patentansprüche

1. Verfahren zum Steuern einer Lichtverteilung (30) eines Scheinwerfers (14) eines Eigenfahrzeugs (10), mit den folgenden Schritten:
- Erzeugen von Sensordaten von im Umfeld befindlichen Fremdfahrzeugen (34) durch eine Sensoreinrichtung (18);
- Prognose einer Trajektorie (38, 40, 46) zumindest eines der Fahrzeuge (10, 34) anhand der durch die Sensoreinrichtung (18) erfassten Sensordaten;
- Einstellen der Lichtverteilung (30) des Scheinwerfers (14) in Abhängigkeit von der zumindest einen prognostizierten Trajektorie (38, 40, 46), wobei überprüft wird, ob ein Eintrittsereignis eines der Fremdfahrzeuge (34) in einen Bereich der Lichtverteilung (30) bevorsteht, bei welchem ein Blendkriterium durch die Lichtverteilung (30) erfüllt ist, und die Lichtverteilung (30) des Scheinwerfers (14) so eingestellt wird, dass das Erfüllen des Blendkriteriums in dem Bereich verhindert wird,
**dadurch gekennzeichnet, dass**
Manöverwahrscheinlichkeiten der Fremdfahrzeuge (10, 34) und des Eigenfahrzeugs (10) berechnet werden und
die Prognose der Trajektorie (38, 40, 46) zumindest eines der Fahrzeuge (10, 34) unter Berücksichtigung der berechneten Manöverwahrscheinlichkeiten der Fahrzeuge (10, 34) erfolgt und
zum Einstellen der Lichtverteilung (30) des Scheinwerfers (14) die Lichtverteilung (30) entlang der prognostizierten Trajektorie (38, 46) des Eigenfahrzeugs (10) ausgerichtet wird.

2. Verfahren nach Anspruch 1,
**dadurch gekennzeichnet, dass**
die Prognose der zumindest einen Trajektorie (38, 40, 46) mittels eines Bayes Filters (50), insbesondere eines Kalman Filters, gemacht wird und die Manöverwahrscheinlichkeiten bereits vorher in der Prognose mittels einer Manöverprädiktion (52), insbesondere mittels eines probabilistischen Ansatzes wie insbesondere ein dynamisches Bayessches Netz, einer Fuzzy Logik oder einem neuralen Netz berechnet, berücksichtigt wird.

3. Verfahren nach einem der vorhergehenden Ansprüche,
**dadurch gekennzeichnet, dass**
bei der Berechnung von Manöverwahrscheinlichkeiten und/oder der Prognose der Trajektorie (38, 40, 46) eines der Fahrzeuge (10, 34) eine Interaktion des Eigenfahrzeugs (10) mit wenigstens einem der Fremdfahrzeuge (34) berücksichtigt wird.

4. Verfahren nach einem der vorhergehenden Ansprüche,
**dadurch gekennzeichnet, dass**
bei der Berechnung von Manöverwahrscheinlichkeiten und/oder der Prognose der Trajektorie (38, 40, 46) eines der Fahrzeuge (10, 34) eine Interaktion von wenigstens zwei Fremdfahrzeugen (34) miteinander berücksichtigt wird.

5. Verfahren nach einem der vorhergehenden Ansprüche,
**dadurch gekennzeichnet, dass**
aus einer Fahrsituation Plausibilitätskriterien abgeleitet werden und bei der Berechnung von Manöverwahrscheinlichkeiten anhand dieser Plausibilitätskriterien überprüft wird, ob ein Manöver plausibel ist.

6. Verfahren nach einem der vorhergehenden Ansprüche,
**dadurch gekennzeichnet, dass**
für die Berechnung der Manöverwahrscheinlichkeiten und/oder Trajektorien (38, 40, 46) eine digitale Straßenkarte berücksichtigt wird.

7. Steueranlage (12) für einen Scheinwerfer (14) eines Fahrzeugs (10), mit einer Sensoreinrichtung (18), dazu ausgebildet die Lichtverteilung (30) des Scheinwerfers (14) gemäß eines Verfahrens nach einem der vorhergehenden Ansprüche zu steuern.

## Claims

1. Method for controlling a light distribution (30) of a headlamp (14) of an ego vehicle (10), comprising the following steps:
- generating sensor data from external vehicles (34) in the vicinity by means of a sensor apparatus (18);
- predicting a path (38, 40, 46) of at least one of the vehicles (10, 34) based on the sensor data acquired by the sensor apparatus (18);
- adjusting the light distribution (30) of the headlamp (14) depending on the at least one predicted path (38, 40, 46), wherein it is checked whether an entry event of one of the external vehicles (34) into a region of the light distribution (30) is imminent, in which region a glare criterion is fulfilled by the light distribution (30), and the light distribution (30) of the headlamp (14) is adjusted in such a way that the fulfilment of the glare criterion is prevented in the region,
**characterised in that**
manoeuvre probabilities of the external vehicles (10, 34) and the ego vehicle (10) are calculated, and
the path (38, 40, 46) of at least one of the vehicles (10, 34) is predicted taking into account the calculated manoeuvre probabilities of the vehicles (10, 34), and
to adjust the light distribution (30) of the headlamp (14), the light distribution (30) is aligned along the predicted path (38, 46) of the ego vehicle (10).

2. Method according to claim 1,
**characterised in that**
the at least one path (38, 40, 46) is predicted by means of a Bayesian filter (50), in particular a Kalman filter, and the manoeuvre probabilities are taken into account beforehand in the prediction by means of a manoeuvre prediction (52), in particular calculated by means of a probabilistic approach such as, in particular, a dynamic Bayesian network, a fuzzy logic or a neural network.

3. Method according to any of the preceding claims,
**characterised in that**
an interaction of the ego vehicle (10) with at least one of the external vehicles (34) is taken into account when calculating manoeuvre probabilities and/or predicting the path (38, 40, 46) of one of the vehicles (10, 34).

4. Method according to any of the preceding claims,
**characterised in that**
an interaction of at least two external vehicles (34) with one another is taken into account when calculating manoeuvre probabilities and/or predicting the path (38, 40, 46) of one of the vehicles (10, 34).

5. Method according to any of the preceding claims,
**characterised in that**
plausibility criteria are derived from a driving situation and, when calculating manoeuvre probabilities, these plausibility criteria are used to check whether a manoeuvre is plausible.

6. Method according to any of the preceding claims,
**characterised in that**
a digital road map is taken into account for the calculation of the manoeuvre probabilities and/or paths (38, 40, 46).

7. Control system (12) for a headlamp (14) of a vehicle (10), having a sensor apparatus (18) designed to control the light distribution (30) of the headlamp (14) in accordance with a method according to any of the preceding claims.

## Revendications

1. Procédé de commande d'une répartition de lumière (30) d'un phare (14) d'un véhicule particulier (10), comprenant les étapes suivantes :
- génération de données de capteurs de véhicules tiers (34) se trouvant dans l'environnement par un dispositif de capteurs (18) ;
- prévision d'une trajectoire (38, 40, 46) d'au moins l'un des véhicules (10, 34) à l'aide des données de capteur détectées par le dispositif de capteur (18) ;
- réglage de la répartition lumineuse (30) du phare (14) en fonction de la au moins une trajectoire prévue (38, 40, 46), dans lequel on vérifie si un événement d'entrée de l'un des véhicules tiers (34) est imminent dans une zone de la répartition lumineuse (30), dans laquelle un critère d'éblouissement est rempli par la répartition lumineuse (30), et la répartition lumineuse (30) du phare (14) est réglée de telle sorte que le remplissage du critère d'éblouissement est empêché dans la zone,
**caractérisé en ce que**
des probabilités de manœuvre des véhicules tiers (10, 34) et du véhicule particulier (10) sont calculées et
la prévision de la trajectoire (38, 40, 46) d'au moins l'un des véhicules (10, 34) est effectuée en tenant compte des probabilités de manœuvre calculées des véhicules (10, 34) et
pour régler la répartition de lumière (30) du phare (14), la répartition de lumière (30) est orientée le long de la trajectoire prévue (38, 46) du véhicule particulier (10).

2. Procédé selon la revendication 1,
**caractérisé en ce que**
la prévision de ladite au moins une trajectoire (38, 40, 46) est faite au moyen d'un filtre bayésien (50), en particulier un filtre de Kalman, et les probabilités de manœuvre sont déjà prises en compte préalablement dans la prévision au moyen d'une prédiction de manœuvre (52), en particulier calculée au moyen d'une approche probabiliste telle que en particulier un réseau bayésien dynamique, une logique floue ou un réseau neuronal.

3. Procédé selon l'une quelconque des revendications précédentes,
**caractérisé en ce que**
lors du calcul de probabilités de manœuvre et/ou de la prévision de la trajectoire (38, 40, 46) de l'un des véhicules (10, 34), une interaction du véhicule particulier (10) avec au moins l'un des véhicules tiers (34) est prise en compte.

4. Procédé selon l'une quelconque des revendications précédentes,
**caractérisé en ce que**
lors du calcul de probabilités de manœuvre et/ou de la prévision de la trajectoire (38, 40, 46) de l'un des véhicules (10, 34), une interaction d'au moins deux véhicules tiers (34) entre eux est prise en compte.

5. Procédé selon l'une quelconque des revendications précédentes,
**caractérisé en ce que**
des critères de plausibilité sont déduits d'une situation de conduite et, lors du calcul de probabilités de manoeuvre, il est vérifié à l'aide de ces critères de plausibilité si une manœuvre est plausible.

6. Procédé selon l'une quelconque des revendications précédentes,
**caractérisé en ce que**
une carte routière numérique est prise en compte pour le calcul des probabilités de manœuvre et/ou des trajectoires (38, 40, 46).

7. Installation de commande (12) d'un phare (14) d'un véhicule (10), comprenant un dispositif de détection (18), réalisé pour commander la répartition lumineuse (30) du phare (14) selon un procédé selon l'une quelconque des revendications précédentes.
